# EUROPÄISCHE PATENTANMELDUNG

(11) **EP 2 392 445 A2**
(43) Veröffentlichungstag der Anmeldung: **07.12.2011**
(21) Anmeldenummer: 11165559.3
(22) Anmeldetag: 10.05.2011
(51) Int. Cl.: B29C 47/36, B29C 47/38, B05C 17/005

(54) **Handschweißgerät**

(30) Priorität: 01.06.2010 DE 202010007466 U
(71) Anmelder: Wegener International GmbH, 52074 Aachen (DE)
(72) Erfinder: Dietrich, Michael, 52224 Stolberg (DE)
(74) Vertreter: Albrecht, Ralf

(57) **Zusammenfassung**

Die Erfindung betrifft ein Handschweißgerät (1) zum Verschweißen von Kunststoffwerkstücken unter Aufschmelzen eines Schweißzusatzes aus Kunststoff, mit einer Zuführeinrichtung (4) für die Zuführung des Schweißzusatzes in eine Aufschmelzeinrichtung (5) zum Aufschmelzen des Schweißzusatzes, an die sich ausgangsseitig ein Schweißkopf (7) mit einem Austritt (58) für den aufgeschmolzenen Schweißzusatz anschließt, welches dadurch gekennzeichnet ist, dass die Aufschmelzeinrichtung (5) wenigstens zwei nebeneinander angeordnete Aufschmelzeinheiten (24, 25) aufweist und jede Aufschmelzeinheit (24, 25) einen eigenen Durchgangskanal (38, 39) für den Schweißzusatz hat, wobei die Durchgangskanäle (38, 39) in einen Mischkopf (6) zur Vermischung der aus den Durchgangskanälen (38, 39) austretenden, aufgeschmolzenen Schweißzusätze münden.

## Beschreibung

Die Erfindung betrifft ein Handschweißgerät zum Verschweißen von Kunststoffwerkstücken unter Aufschmelzen eines Schweißzusatzes aus Kunststoff, mit einer Zuführeinrichtung für die Zuführung des Schweißzusatzes in eine Aufschmelzeinrichtung zum Aufschmelzen des Schweißzusatzes, an die sich ausgangsseitig ein Schweißkopf mit einem Austritt für den aufgeschmolzenen Schweißzusatz anschließt.

Solche Handschweißgeräte sind beispielweise aus der DE 38 08 723 C1, DE 38 35 250 C1, US 5,005,731 A, DE 42 36 281 C2, EP 0 663 277 A1, DE 297 18 972 U1, DE 299 21 650 U1, EP 1 083 037 B1, EP 1 634 688 B1, EP 1 634 689 A1, EP 1 637 234 B1, DE 20 2005 000 130 U1 und DE 20 2007 014 871 U1 bekannt. Sie werden zum Verschweißen von Kunststoffwerkstücken, beispielsweise Platten aus Kunststoff oder dergleichen, verwendet. Trotz der im Detail verschiedenen Ausführungen ist ihr Grundaufbau über Jahrzehnte gleich geblieben. Sie weisen einen Antrieb in Form oder ähnlich einer Handbohrmaschine auf, die mit einem darauf abnehmbar aufgesetzten Vorsatz versehen ist. Dieser Vorsatz enthält eine Zuführeinrichtung für die Zuführung eines Schweißzusatzes in eine Aufschmelzeinrichtung, die dazu bestimmt ist, den dahin geförderten Schweißzusatz aufzuschmelzen. Hierzu weist die Aufschmelzeinrichtung eine Heizeinrichtung auf, die einem länglichen Aufschmelzgehäuse zugeordnet ist, der von einem Durchgangskanal durchsetzt ist. In der Aufschmelzeinrichtung wird der jeweils als Schweißzusatz verwendeten Kunststoff auf eine solche Temperatur erhitzt, dass er schmilzt. Hierzu ist die Aufschmelzeinrichtung von einer Heizeinrichtung umgeben. Der aufgeschmolzene Schweißzusatz gelangt dann in den Schweißkopf und tritt dort zwecks Unterstützung des Schweißvorgangs aus.

Als Schweißzusatz können Kunststoffe in Granulatform oder als Draht verwendet werden. Im letzteren Fall weist die Zuführeinrichtung einen Drahtzuführkanal und eine sich anschließende Einzugschnecke auf, die von dem Antrieb in Drehbewegung versetzbar ist. Die Einzugschnecke weist an ihrem Mantel ein ein- oder mehrgängiges Einzuggewinde auf. Dabei können auch mehrere Einzugkanäle vorgesehen sein, um den Einzug von Kunststoffdrähten verschiedener Durchmesser oder den gleichzeitigen Einzug mehrerer Kunststoffdrähte zu ermöglichen. Die Zuführeinrichtung bzw. die Einzugschnecke ist an den Durchmesser des Kunststoffdrahtes derart angepasst, dass der Kunststoffdraht beim Einführen von dem Einzuggewinde der Einzugschnecke erfasst, in axialer Richtung eingezogen und in Richtung auf die Aufschmelzeinrichtung transportiert wird.

In vielen Fällen ist zwischen Zuführeinrichtung und Aufschmelzeinrichtung zusätzlich eine Zerkleinerungseinrichtung angeordnet, in der der Kunststoffdraht zerstückelt wird, so dass er in granulierter Form in die Aufschmelz-einrichtung eintritt.

Vielfach ist die Aufschmelzeinrichtung als Extrudiereinheit ausgebildet. In diesem Fall wird der Durchgangskanal von einer Extrudierschnecke durchsetzt, die über die Zuführeinrichtung und die dort vorhandene Einzugschnecke mit dem Antrieb verbunden ist. Bei Betrieb des Handschweißgerätes wird die Extrudierschnecke zwecks Förderung des Schweißzusatzes in Drehbewegung versetzt. Dabei wird durch die Reibung innerhalb des Durchgangskanals mechanische in thermische Energie umgewandelt und damit der Aufschmelzprozess unterstützt. Bei einfachen Handschweißgeräten wird auf eine solche Extrudierschnecke verzichtet (vgl. DE 298 18 757 U1).

Handschweißgeräte der vorbeschriebenen Art haben sich für die Verschweißung von Kunststoffwerkstücken mit Wandstärken bis zu 30 mm bewährt. Dabei muss der Ausstoß (Volumenstrom) an Schweißzusatz um so größer sein, je dicker die Wandstärke der zu verschweißenden Werkstücke ist. Je größer der Ausstoß, desto größer müssen nicht nur der Durchmesser des Durchgangskanals der Aufschmelzeinrichtung sein, sondern auch dessen Länge. Im Augenblick befindet man sich mit den größten Handschweißgeräten dieser Art bei einem Ausstoß von 6,2 kg/h im Falle von Polyethylen und 5,2 kg/h im Falle von Polypropylen als Schweißzusatz. Eine Vergrößerung des Ausstoßes, um Kunststoffwerkstücke mit noch höherer Wandstärke verschweißen zu können, würde das Handschweißgerät wegen der Dimensionen der Aufschmelzeinrichtung so sperrig machen, dass es für eine Bedienungsperson kaum noch handhabbar wäre, insbesondere wenn Schweißnähte unter beengten Raumverhältnissen gezogen werden müssten. Wegen der Einsatzflexibilität solcher Handschweißgeräte besteht jedoch ein Bedürfnis, sie auch beim Verschweißen von Kunststoffwerkstücken mit Wanddicken einzusetzen, für die sie bisher nicht geeignet waren.

Der Erfindung liegt folglich die Aufgabe zugrunde, ein Handschweißgerät zu entwickeln, das trotz deutlich erhöhtem Ausstoß eine gute Handhabbarkeit und Bedienbarkeit hat.

Diese Aufgabe wird erfindungsgemäß dadurch gelöst, dass die Aufschmelzeinrichtung wenigstens zwei nebeneinander angeordnete Aufschmelzeinheiten aufweist - oder auch mehr als zwei, also drei oder vier Aufschmelzeinheiten - und jede Aufschmelzeinheit einen eigenen Durchgangskanal für den Schweißzusatz hat, wobei die Durchgangskanäle in einen Mischkopf zur Vermischung der aus den Durchgangskanälen austretenden, aufgeschmolzenen Schweißzusätze münden. Grundgedanke der Erfindung ist es somit, den Schweißzusatz in zwei oder mehr nebeneinander angeordneten Aufschmelzeinheiten zu plastifizieren und die beiden Schweißzusatzströme in einem Mischkopf zu vereinigen, um sie dann über den Schweißkopf austreten zu lassen. Im Vergleich zu einem Handschweißgerät mit einer einzigen Aufschmelzeinheit gleicher Länge lässt sich der Ausstoß verdoppeln, wenn zwei solche Aufschmelzeinheiten vorgesehen werden. Trotzdem leidet die Handhabbarkeit des erfindungsgemäßen Handschweißgerätes kaum, da sich seine Maße nur wenig verändern. Es kann deshalb nach wie vor auch unter beengten räumlichen Verhältnissen eingesetzt werden, jetzt aber auch zur Verschweißung von Kunststoffwerkstücken mit deutlich größeren Wandstärken verwendet werden. Das Einsatzgebiet solcher Handschweißgeräte wird durch die Verdopplung des Ausstoßes stark erweitert. In Kauf genommen werden muss nur ein etwas höheres Gewicht. Dies kann jedoch beispielsweise durch eine Trageinrichtung aufgefangen werden.

In Ausbildung der Erfindung ist vorgesehen, dass sich die Durchgangskanäle parallel zueinander erstrecken. Dies schließt jedoch nicht aus, dass die Durchgangskanäle z.B. so ausgerichtet werden, dass sie sich in Richtung auf den Mischkopf V-förmig einander annähern.

Grundsätzlich eignet sich das erfindungsgemäße Prinzip auch für Aufschmelzeinrichtungen ohne Extrudierschnecken in den Durchgangskanälen, so dass das Aufschmelzen allein durch die Heizeinrichtung bewirkt wird (vgl. DE 298 18 757 U1). Für die hier gewünschten hohen Durchsätze eignen sich jedoch eher Aufschmelzeinheiten, die als Extrudiereinheiten mit in den Durchgangskanälen angeordneten Extrudierschnecken ausgebildet sind, wobei die Extrudierschnecken eingangsseitig mit einer Antriebseinrichtung gekoppelt sind, über die sie in Drehung versetzt werden können. Dabei besteht grundsätzlich die Möglichkeit, für jede Extrudierschnecke einen zugehörigen Antriebsmotor vorzusehen. Als zweckmäßig, weil kostengünstiger und leichter, hat es sich jedoch herausgestellt, einen einzigen Antriebsmotor vorzusehen, der über ein Verteilergetriebe mit den Extrudierschnecken verbunden ist. Als Verteilergetriebe kommen Zahnriemen-, Ketten- oder Zahnradgetriebe in Frage. Letztere stellen wegen der mittleren Geräuschentwicklung und dem kleinen Bauraum einen zweckmäßigen Kompromiss dar. Eine vorteilhafte Ausführungsform eines solchen Zahnradgetriebes besteht in Form eines Stirnradgetriebes mit einem antriebsseitigen ersten Zahnrad und extrudierseitigen Zahnrädern, die mit dem ersten Zahnrad direkt und/oder indirekt kämmen. Die Zahnräder sind vorteilhafterweise mit einer Schrägverzahnung versehen.

Das Verteilergetriebe ist in einem Getriebegehäuse angeordnet, das antriebsseitig einen Flansch für den Antriebsmotor aufweist. Auf diese Weise bedarf es für den Antriebsmotor keines weiteren Gehäuses.

Wegen der hier erforderlichen Leistung ist ein Elektromotor als Antriebsmotor weniger geeignet, da er bei diesen Anforderungen ein relativ hohes Gewicht hat. Eine erheblich größere Leistungsdichte hat ein Hydraulikmotor. Er wird deshalb den Anforderungen des erfindungsgemäßen Handschweißgerätes besonders gerecht. Der Hydraulikmotor sollte aus Gewichtsgründen über flexible Schläuche mit einer separaten Hydraulikpumpe verbunden oder verbindbar sein. Als Hydraulikmotoren kommen grundsätzlich alle Ausführungsformen in Frage, beispielsweise Axialkolben-, Radialkolben-, Flügelzellen- oder Drehschiebermotoren, aber auch Zahnradmotoren als innen- oder außenverzahnte Varianten. Besonders geeignet sind Gerotormotoren beispielsweise in Form eines Orbitalmotors, da sie Langsamläufer sind und in der Lage sind, auch bei niedrigen Drehzahlen und dennoch kleinen Baugrößen die hier erforderliche Leistung aufzubringen. Durch Einsatz solcher Motoren ist eine Untersetzung im Verteilergetriebe nicht erforderlich, d.h. es können im Falle eines Zahnradgetriebes Zahnräder gleichen Durchmessers zur Anwendung kommen, was kostengünstig ist.

Sofern für den Betrieb des Hydraulikmotors ein zur Schmierung geeignetes Mineralöl verwendet wird, ist es zweckmäßig, eine Verbindung mit dem Verteilergetriebe herzustellen, und zwar dergestalt, dass das von der Hydraulikpumpe geförderte Hydrauliköl das Verteilergetriebe zu dessen Schmierung durchströmt. Auf diese Weise ist die Schmierung des Verteilergetriebes ohne wesentliche zusätzliche Maßnahmen gesichert.

In besonders bevorzugter Ausführung sollten die Aufschmelzeinheiten voneinander getrennt sein, also nicht direkt miteinander verbunden sein, sondern allenfalls über zusätzliche Bauteile wie Verteilergetriebe und/oder Mischkopf. Dies hat den Vorteil, dass Aufschmelzeinheiten aus den Baureihen vorhandener Handschweißgeräte ohne weitere Änderungen verwendet werden können. Auf diese Weise lassen sich aus einer vorhandenen Baureihe von Handschweißgeräten eine Baureihe von erfindungsgemäßen Handschweißgeräten bilden, die jeweils gegenüber dem Bautyp, dessen Aufschmelzeinheit verwendet wird, einen verdoppelten Ausstoß haben (oder einen verdreifachten, wenn drei Aufschmelzeinheiten auf erfindungsgemäße Weise miteinander kombiniert werden etc.). Selbstverständlich schließt dies nicht aus, den Aufschmelzeinheiten ein gemeinsames Aufschmelzgehäuse zu geben, das dann von zwei oder mehr Durchgangskanälen durchsetzt ist.

Der Mischkopf sollte im Anschluss an die Aufschmelzeinheit einen ersten Abschnitt mit ineinander mündenden Austrittskanälen und einen zweiten, an den ersten anschließenden Abschnitt aufweisen, der einen Mischkanal vorzugsweise mit einem statischen Mischeinsatz hat. Als solche Mischeinsätze kommen beispielsweise solche gemäß EP 1 815 904 A1 oder EP 1 924 346 B1 in Frage. Sie sorgen für eine intensive Durchmischung der beiden aus den Durchgangskanälen der Aufschmelzeinheiten kommenden Schmelzzusatzströme, ohne einen größeren Widerstand entgegenzusetzen. Dabei sollte der erste und zweite Abschnitt zwei getrennte, aber miteinander verbundene Bauteile bilden.

Damit beim Kaltstart der im Mischkopf verbliebene Schweißzusatz aufgeschmolzen werden kann und während des Durchflusses durch den Mischkopf nicht zu stark abkühlt, sollte der Mischkopf mit einer Heizeinrichtung versehen sein, die vorzugsweise mit einer eigenen Temperaturregeleinrichtung gekoppelt ist.

In weiterer Ausgestaltung der Erfindung ist vorgesehen, dass die Zuführeinrichtung aus separaten Zuführeinheiten besteht und jeder Aufschmelzeinheit eine eigene Zuführeinheit zugeordnet ist. Dabei sollten die Einheiten aus Aufschmelzeinheit und jeweils zugehöriger Zuführeinheit voneinander getrennt sein. Auch insoweit kann dann auf die vorhandenen Handschweißgeräte zurückgegriffen werden, d.h. es können von diesen Handschweißgeräten auch die mit der Zuführeinheit kombinierte Aufschmelzeinheit unverändert übernommen werden. Sofern das Handschweißgerät Extrudiereinheiten mit einer Antriebseinrichtung aufweist, sollte jede Zuführeinheit eine eigene Drahtzufuhr und eine eigene Einzugsschnecke aufweisen, wobei jede Einzugsschnecke koaxial zu der jeweils zugehörigen Extrudierschnecke angeordnet und mit dieser verbunden ist und die Einzugschnecken mit der Antriebseinrichtung gekoppelt sind.

In weiterer Ausgestaltung der Erfindung ist vorgesehen, dass die Aufschmelzeinheiten separate Heizeinheiten mit voneinander unabhängigen Temperaturregeleinrichtungen aufweisen. Auf diese Weise ist gesichert, dass es zu einem zuverlässigen Aufschmelzen des Schweißzusatzes in jeder der Aufschmelzeinheiten kommt.

Nach der Erfindung ist ferner vorgesehen, dass eine Heißlufteinrichtung zum Vorwärmen der Schweißnaht vorgesehen ist, die eine Austrittsöffnung nahe dem Schweißkopf hat und mit einer eigenen Temperaturregeleinrichtung versehen ist. Über diese Heißlufteinrichtung wird Heißluft mit einer Temperatur von 250 bis 400°C auf die Schweißstelle geblasen, um sie zu plastifizieren. Die Heißlufteinrichtung sollte aus Gewichtsgründen einen separaten Heißlufterzeuger aufweisen, der über einen Heißluftschlauch mit einer zum Schweißkopf führenden und mit dem Handschweißgerät verbundenen Heißluftrohr gekoppelt oder koppelbar ist.

In der Zeichnung ist die Erfindung anhand eines Ausführungsbeispiels näher veranschaulicht. Es zeigen:
- Figur 1: eine Schrägansicht des erfindungsgemäßen Handschweißgerätes ohne Handgriffe,
- Figur 2: einen vertikalen Längsschnitt durch das Handschweißgerät gemäß Figur 1, und
- Figur 3: einen horizontalen Längsschnitt (Ebene C-C in Figur 2) durch das Handschweißgerät gemäß den Figuren 1 und 2.

Das in den Figuren dargestellte Handschweißgerät 1 besteht in der Reihenfolge von hinten nach vorn aus folgenden Hauptteilen, nämlich einem als Orbitalmotor ausgebildeten Hydraulikmotor 2, einem Verteilergetriebe 3, einer Zuführeinrichtung 4 mit Granuliereinrichtung und thermischer Trennung, einer Aufschmelzeinrichtung 5, einem Mischkopf 6 und einem Schweißkopf 7. Nicht dargestellt sind Handgriffe zur Handhabung des Handschweißgerätes 1, die für die Montage unterhalb des Verteilergetriebes 3 und quer dazu vorgesehen sind.

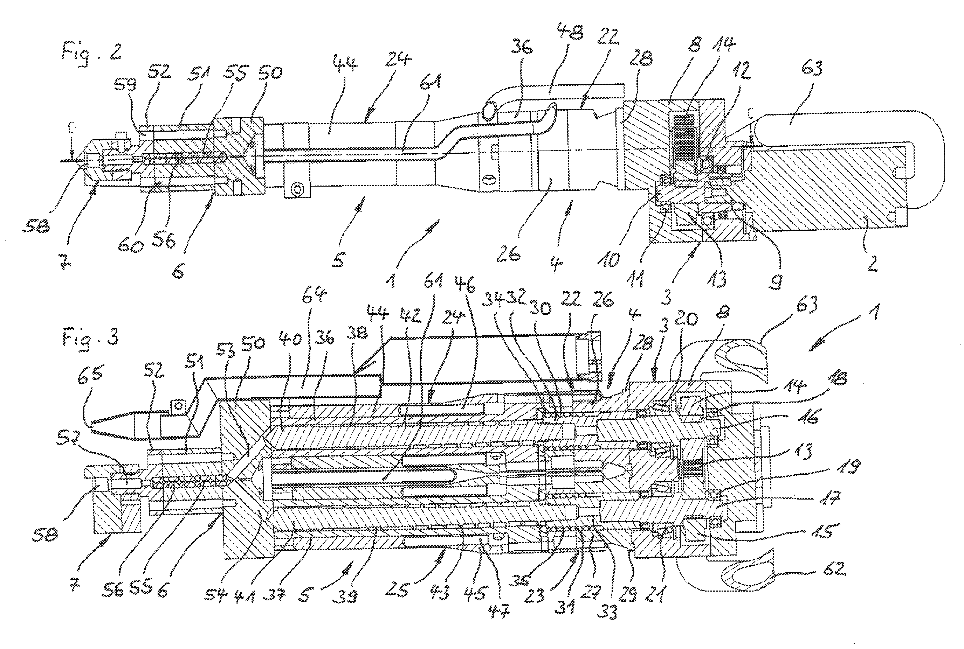

Wie insbesondere aus den Figuren 2 und 3 zu erkennen ist, ist der Hydraulikmotor 2 an der Rückseite des Getriebegehäuses 8 des Verteilergetriebes 3 angeflanscht. Er hat eine Abtriebswelle 9, die mit einer Zahnradwelle 10 drehfest verbunden ist. Die Zahnradwelle 10 ist in Kugellagern 11, 12 in dem Getriebegehäuse 8 gelagert. Auf ihr sitzt ein erstes Stirnzahnrad 13, das mit zwei oberhalb davon und nebeneinander angeordneten zweiten Stirnzahnrädern 14, 15 direkt kämmt. Die Mittelpunkte der drei Stirnzahnräder 13, 14, 15 bilden also ein Dreieck. Die zweiten Stirnzahnräder 14, 15 sitzen drehfest auf Zahnradwellen 16 bzw. 17, welche an ihren hinteren Enden in Kugellagern 18 bzw. 19 und vorderseitig auf Schrägwälzlagern 20 bzw. 21 gelagert sind.

Die sich an das Verteilergetriebe 3 anschließende Zuführeinrichtung 4 ist in zwei Zuführeinheiten 22, 23 - jeweils versehen mit einer eigenen Granuliereinrichtung, bestehend aus einem mehrschneidigen Messerrad und Isolierscheiben außen - und die darauffolgende Aufschmelzeinrichtung 5 in zwei Aufschmelzeinheiten 24, 25 aufgeteilt. Dabei bilden die Zuführeinheit 22 und die Aufschmelzeinheit 24 sowie die Zuführeinheit 23 und die Aufschmelzeinheit 25 jeweils zusammenhängende Einheiten, die nicht unmittelbar untereinander verbunden sind, aber nebeneinander liegen.

Die Zuführeinheiten 22, 23 weisen jeweils ein Zuführgehäuse 26 bzw. 27 auf, die unabhängig voneinander über Flansche 28 bzw. 29 mit dem Getriebehäuse 8 des Verteilergetriebes 3 verbunden sind. Innerhalb der Zuführgehäuse 26, 27 befinden sich im Querschnitt kreisrunde Einzugskanäle 30 bzw. 31, die parallel zueinander ausgerichtet sind und in denen Einzugsschnecken 32 bzw. 33 drehbar angeordnet sind, welche außenseitig ein Einzugsgewinde 34 bzw. 35 tragen. Die Einzugsschnecke 32 ist in koaxialer Anordnung drehfest mit der Zahnradwelle 16 und die Einzugsschnecke 33 ebenfalls in koaxialer Anordnung drehfest mit der Zahnradwelle 17 verbunden. In die Einzugskanäle 30, 31 münden schräg durch die Zuführgehäuse 26 bzw. 27 gehende, voneinander getrennte Einzugskanäle, die hier nicht näher dargestellt sind und über die jeweils ein Schweißzusatz aus Kunststoff in Drahtform eingezogen werden kann.

An die vorderseitige Stirnseite des Zuführgehäuses 26 sind die Aufschmelzeinheit 24 und an die vorderseitige Stirnseite des Zuführgehäuses 27 die Aufschmelzeinheit 25 angeflanscht. Die Aufschmelzeinheiten 24, 25 haben jeweils ein langgestrecktes Aufschmelzgehäuse 36 bzw. 37, die jeweils von einem zylindrischen Durchgangskanal 38 bzw. 39 durchsetzt sind. Die Durchgangskanäle 38, 39 stehen zuführseitig mit dem jeweils zugehörigen Einzugskanal 30 bzw. 31 in Verbindung.

In den Durchgangskanälen 38, 39 ist jeweils eine Extrudierschnecke 40 bzw. 41 angeordnet. Die Extrudierschnecken 40, 41 haben außenseitig ein Schneckengewinde 42, 43. Die Extrudierschnecke 40 sind drehfest mit der Einzugsschnecke 32 und die Extrudierschnecke 41 mit der Einzugsschnecke 33 verbunden.

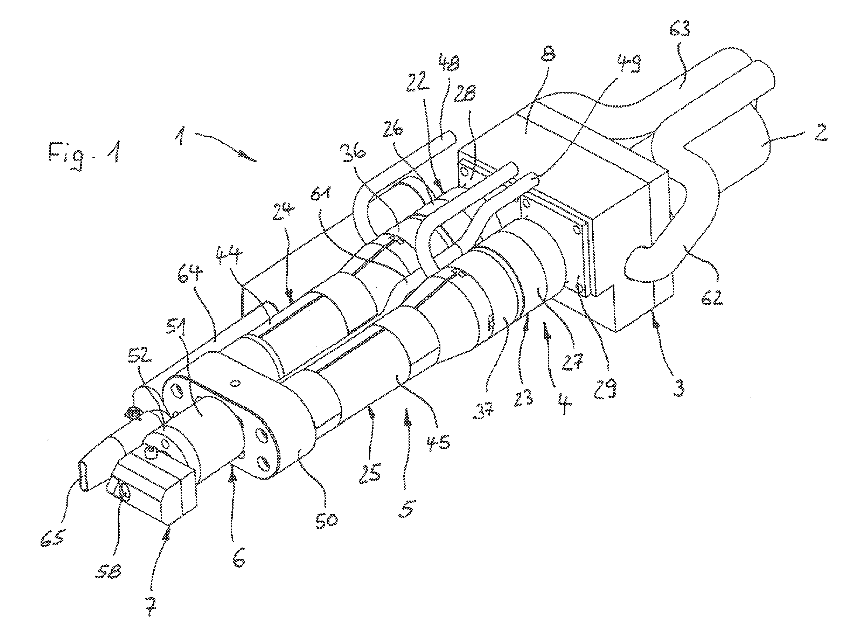

Die Aufschmelzgehäuse 36, 37 sind jeweils von einem hülsenförmigen Heizmantel 44, 45 umgeben. Die Heizmäntel 44, 45 weisen über den Umfang verteilt Aufnahmebohrungen - beispielhaft mit 46 bzw. 47 bezeichnet -, in die jeweils - hier nicht sichtbar - Heizkartuschen eingesetzt sind. Die elektrischen Leitungen hierfür verlaufen in Schutzrohren 48 bzw. 49 (siehe Figur 1).

An das vordere Ende der Aufschmelzgehäuse 36, 37 ist der Mischkopf 6 angeflanscht. Er verbindet die vorderen Enden der Aufschmelzgehäuse 36, 37. Der Mischkopf 6 ist hintereinander in einen aufschmelzseitigen ersten Abschnitt 50 sowie einen zweiten und einen dritten Abschnitt 51, 52 aufgeteilt. In dem ersten Abschnitt 50 verlaufen zwei Kanäle 53, 54, wobei der eine Kanal 53 zum Durchgangskanal 38 und der zweite Kanal 54 zum Durchgangskanal 39 hin offen sind. Sie vereinigen sich unter Ausbildung eines Mischkanals 55, der den zweiten und den dritten Abschnitt 51,52 durchsetzt und in dem ein statischer Mischeinsatz 56 eingesetzt ist. Auf den dritten Abschnitt 53 aufgesetzt ist der Schweißkopf 7 mit einer Fortsetzung 57 des Mischkanals 55 und dem Austritt 58.

Die drei Abschnitte 50, 51, 52 sind über hier nicht dargestellte Schrauben miteinander verspannt, die in Schraubenkanälen 59, 60 eingesetzt sind. In Umfangsrichtung dazu versetzt sind Bohrungen, in die Heizkartuschen eingesetzt sind. Die elektrische Versorgung der Heizkartuschen erfolgt über Kabel, die in einem weiteren Schutzrohr 61 verlaufen.

Die Energieversorgung des Hydraulikmotors 2 erfolgt über eine externe, mit einem Elektromotor angetriebene Hydraulikpumpe (nicht dargestellt), die über Hin- und Rückführschläuche mit dem Handschweißgerät 1 bzw. dem Hydraulikmotor 2 verbunden sind. Da als Hydrauliköl ein solches mit Schmiereigenschaften verwendet wird, mündet ein Teilstrom über ein Zuführrohr 62 in den Innenraum des Getriebegehäuses 8 zwecks Schmierung der dort vorhandenen Stirnzahnräder 13, 14, 15 und der Kugellager 11, 12, 18, 19 und der Schrägwälzlager 20, 21. Nach Durchlaufen des Getriebegehäuses 8 wird das Hydrauliköl über das Abführrohr 63 aus dem Getriebegehäuse 8 herausgeführt.

Dem Handschweißgerät 1 zugeordnet ist ein ebenfalls externes Heißluftgerät, in dem heiße Luft im Temperaturbereich von 250 bis 400°C erzeugt und über ein Gebläse und einen Heißluftschlauch dem Handschweißgerät 1 zugeführt wird. Dort mündet es in ein im Wesentlichen parallel zu der Aufschmelzeinrichtung 5, dem Mischkopf 6 und dem Schweißkopf 7 verlaufenden Heißluftrohr 64, das eine düsenförmige Mündung 65 neben dem Schweißkopf 7 und auf Höhe dessen Austritts 58 hat.

Ein Schweißvorgang wird dadurch eingeleitet, dass das Handschweißgerät 1 und hier insbesondere die Aufschmelzeinheiten 24, 25 und der Mischkopf 6 auf Betriebstemperatur gebracht werden, um den in dem Handschweißgerät 1 befindlichen Schweißzusatz aufzuschmelzen. Erst wenn dies geschehen ist, erfolgt die Freigabe für den Hydraulikmotor 2. In die Einzugskanäle 30, 31 werden Schmelzzusatzdrähte eingeführt, so dass sie in den Eingriffsbereich der Einzugsschnecken 32, 33 kommen. Gleichzeitig wird das Heißluftgerät in Gang gesetzt, um die Luftvorwärmung auf Betriebstemperatur zu bringen. Dann kann der Schweißkopf 7 auf die herzustellende Schweißnaht aufgesetzt werden. Aus der Mündung 65 des Heißluftrohrs 64 strömt dann heiße Luft auf die Schweißstelle, so dass sie plastifiziert wird.

Daran anschließend wird der Hydraulikmotor 2 in Gang gesetzt. Die Drehbewegung seiner Abtriebswelle 9 wird über die Zahnradwelle 10 auf das erste Stirnzahnrad 13 und von dort auf die zweiten Stirnzahnräder 14, 15 übertragen. Hierdurch werden die Einzugsschnecken 32, 33 und die jeweils daran angeschlossenen Extrudierschnecken 44 bzw. 41 in Drehbewegung versetzt. Mittels der Einzugsgewinde 34, 35 wird der jeweils zugehörige Schmelzzusatzdraht in den Einzugskanal 30 bzw. 31 eingezogen und in axialer Richtung bis zu der jeweils zugehörigen Granuliereinrichtung transportiert. Dort werden die Schmelzzusatzdrähte in Einzelstücke granuliert, so dass der Schmelzzusatz in Granulatform in die Durchgangskanäle 38, 39 eintritt. Hier wird er von der jeweils zugehörigen Extruderschnecken 40 bzw. 41 erfasst und durch den jeweils entsprechenden Durchgangskanal 38 bzw. 39 axial transportiert. Dabei wird der Schmelzzusatz infolge Erwärmung durch die in den Heizmänteln 44, 45 sitzenden Heizkartuschen und durch die Reibung auf eine Temperatur von normalerweise über 200°C erhitzt, wodurch der Schmelzzusatz aufgeschmolzen wird.

Die aus den Durchgangskanälen 38, 39 ausströmenden Teilströme aus Schmelzzusatz gelangen in die Kanäle 53 bzw. 54 und vereinigen sich in dem Mischkanal 55, wo sie zur Vermeidung von Fließfronten mittels des Mischeinsatzes 56 intensiv durchmischt werden. Dabei wird die Temperatur durch die dort eingesetzten Heizkartuschen aufrecht erhalten. Über den Schweißkopf 7 und dessen Austritt 58 gelangt dann der Schweißzusatz in plastifizierter Form auf die Schweißstelle.

## Patentansprüche

1. Handschweißgerät (1) zum Verschweißen von Kunststoffwerkstücken unter Aufschmelzen eines Schweißzusatzes aus Kunststoff, mit einer Zuführeinrichtung (4) für die Zuführung des Schweißzusatzes in eine Aufschmelzeinrichtung (5) zum Aufschmelzen des Schweißzusatzes, an die sich ausgangsseitig ein Schweißkopf (7) mit einem Austritt (58) für den aufgeschmolzenen Schweißzusatz anschließt, **dadurch gekennzeichnet, dass** die Aufschmelzeinrichtung (5) wenigstens zwei nebeneinander angeordnete Aufschmelzeinheiten (24, 25) aufweist und jede Aufschmelzeinheit (24, 25) einen eigenen Durchgangskanal (38, 39) für den Schweißzusatz hat, wobei die Durchgangskanäle (38, 39) in einen Mischkopf (6) zur Vermischung der aus den Durchgangskanälen (38, 39) austretenden, aufgeschmolzenen Schweißzusätze münden.

2. Handschweißgerät nach Anspruch 1, **dadurch gekennzeichnet, dass** sich die Durchgangskanäle (38, 39) parallel zueinander erstrecken.

3. Handschweißgerät nach Anspruch 1 oder 2, **dadurch gekennzeichnet, dass** die Aufschmelzeinheiten (24, 25) als Extrudiereinheiten mit in den Durchgangskanälen (38, 39) angeordneten Extrudierschnecken (40, 41) ausgebildet sind und die Extrudierschnecken (40, 41) eingangsseitig mit einer Antriebseinrichtung (2) gekoppelt sind.

4. Handschweißgerät nach Anspruch 3, **dadurch gekennzeichnet, dass** die Antriebseinrichtung einen einzigen Antriebsmotor (2) aufweist, der über ein Verteilergetriebe (3) mit den Extrudierschnecken (40, 41) verbunden ist, wobei insbesondere das Verteilergetriebe (3) als Stirnradgetriebe mit einem antriebsseitigen ersten Zahnrad (13) und extrudierseitigen Zahnrädern (14, 15) versehen ist, die mit dem ersten Zahnrad (13) direkt und/oder indirekt kämmen.

5. Handschweißgerät nach Anspruch 4, **dadurch gekennzeichnet, dass** das Verteilergetriebe (3) in einem Getriebegehäuse (8) angeordnet ist, das antriebsseitig einen Flansch für den Antriebsmotor (2) aufweist.

6. Handschweißgerät nach einem der Ansprüche 4 bis 5, **dadurch gekennzeichnet, dass** der Antriebsmotor als Hydraulikmotor (2) ausgebildet ist, der über flexible Schläuche mit einer Hydraulikpumpe verbunden oder verbindbar ist, wobei insbesondere der Hydraulikmotor (2) als Gerotormotor, insbesondere Orbitalmotor, ausgebildet ist.

7. Handschweißgerät nach Anspruch 5 und 6, **dadurch gekennzeichnet, dass** das Verteilergetriebe (3) Verbindung mit der Hydraulikpumpe derart hat, dass das von der Hydraulikpumpe geförderte Hydrauliköl das Verteilergetriebe (3) zu dessen Schmierung durchströmt.

8. Handschweißgerät nach einem der Ansprüche 1 bis 7, **dadurch gekennzeichnet, dass** die Aufschmelzeinheiten (24, 25) voneinander getrennt sind.

9. Handschweißgerät nach einem der Ansprüche 1 bis 10, **dadurch gekennzeichnet, dass** der Mischkopf (6) im Anschluss an die Aufschmelzeinheiten (24, 25) einen ersten Abschnitt (50) mit ineinander mündenden Austrittskanälen (53, 54) und einen zweiten, an den ersten anschließenden Abschnitt (51) aufweist, den ein Mischkanal (55) vorzugsweise mit einem statischen Mischeinsatz (56) hat, wobei insbesondere der erste und zweite Abschnitt (50, 51) zwei getrennte, aber miteinander verbundene Bauteile bilden.

10. Handschweißgerät nach einem der Ansprüche 1 bis 9, **dadurch gekennzeichnet, dass** der Mischkopf (6) mit einer Heizeinrichtung versehen ist, wobei insbesondere die Heizeinrichtung des Mischkopfs (6) mit einer Temperaturregeleinrichtung versehen ist.

11. Handschweißgerät nach einem der Ansprüche 1 bis 10, **dadurch gekennzeichnet, dass** die Zuführeinrichtung (4) aus separaten Zuführeinheiten (22, 23) besteht und jeder Aufschmelzeinheit (24, 25) eine eigene Zuführeinheit (22, 23) zugeordnet ist, wobei insbesondere die Einheiten aus Aufschmelzeinheit (24, 25) und jeweils zugehöriger Zuführeinheit (22, 23) voneinander getrennt sind.

12. Handschweißgerät nach einem der Ansprüche 3 bis 7 sowie Anspruch 11, **dadurch gekennzeichnet, dass** jede Zuführeinheit (22, 23) eine eigene Drahtzufuhr und eine eigene Einzugsschnecke (32, 33) aufweist, wobei jede Einzugsschnecke (32, 33) koaxial zu der jeweils zugehörigen Extrudierschnecke (40, 41) angeordnet und mit dieser verbunden ist und die Einzugsschnecken (40, 41) mit der Antriebseinrichtung (2) gekoppelt sind.

13. Handschweißgerät nach einem der Ansprüche 1 bis 12, **dadurch gekennzeichnet, dass** die Aufschmelzeinheiten (24, 25) separate Heizeinheiten mit voneinander unabhängigen Temperaturregeleinrichtungen aufweisen.

14. Handschweißgerät nach einem der Ansprüche 1 bis 13, **dadurch gekennzeichnet, dass** eine Heißlufteinrichtung vorgesehen ist, die eine Austrittsöffnung (65) nahe dem Schweißkopf (7) hat und mit einer eigenen Temperaturregeleinrichtung versehen ist, wobei insbesondere die Heißlufteinrichtung einen Heißlufterzeuger aufweist, der über einen Heißluftschlauch mit einer zum Schweißkopf (7) führenden und mit dem Handschweißgerät (1) verbundenen Heißluftrohr (64) gekoppelt oder koppelbar ist.
